# EUROPEAN PATENT APPLICATION

(11) **EP 3 151 126 A1**
(43) Date of publication of application: **05.04.2017**
(21) Application number: 15306550.3
(22) Date of filing: 01.10.2015
(51) Int. Cl.: G06F 12/14, G06F 21/53, G06F 21/62, G06F 21/77, G06F 21/79, G06F 9/455

(54) **APPLICATIVE VIRTUAL MACHINE**

(71) Applicant: GEMALTO SA, 92190 Meudon (FR)
(72) Inventor: DELSUC, Julien, 13881 GEMENOS Cedex (FR); COGNIAUX, Geoffroy, 13881 GEMENOS Cedex (FR)
(74) Representative: Grevin, Emmanuel

(57) **Abstract**

The invention is an applicative virtual machine that comprises a unique interface and is configured to fully delegate, through the unique interface, the structured storage of data to several autonomous entities which are separate from the virtual machine and which are configured to identify the physical memory location of said data.

## Description

### (Field of the invention)

The present invention relates to applicative virtual machines. It relates particularly to the domain of architecture of virtual machines (VM).

### (Background of the invention)

Applicative virtual machines are designed to run applications. They are supposed to be implemented above an operating system layer. They provide an abstracted and platform-independent program execution environment. They differ from system virtual machines (also called full virtualization virtual machines) that provide a complete substitute for a targeted hardware machine.

Conventional applicative virtual machines (like a Java ® VM) include an internal memory manager designed to fully handle storage and retrieval of data in volatile and non-volatile memories. Such an internal memory manager is in charge of the management of the storage format of data. These internal memory managers are designed based on low level features of the memory components used for storage of data. In other word, conventional applicative virtual machines are designed to comply with hardware requirements coming from the storage components; and must know specific properties of each memory component it needs to support.

There is a need to enhance design of applicative virtual machines so that they can be independent of the low level features of the memory components intended to store data.

### (Summary of the Invention)

An object of the invention is to solve the above mentioned technical problem.

An object of the present invention is an applicative virtual machine comprising a unique interface and configured to fully delegate, through said unique interface, the structured storage of data to autonomous entities which are separate from the virtual machine and which are configured to identify the physical memory location of said data.

Advantageously, the virtual machine may be able to run applications which are designed for a specific language specialized to a particular application domain, said specific language providing a set of operators for manipulating data by their meaning regardless of their physical location and their storage format.

Advantageously, the virtual machine may be able to run an application and may be designed to use a volatile working memory for manipulating data of said application. The virtual machine may be configured to delegate to one of said autonomous entities the structured storage of data of said application in another memory component different from said volatile working memory.

Advantageously, the virtual machine may be configured to receive from one of said autonomous entities an asynchronous signal reflecting an event impacting data stored in one of said autonomous entities.

Advantageously, the virtual machine may be able to access data stored in said autonomous entities through the unique interface irrespective of the technological type of said autonomous entities.

Advantageously, the unique interface may be adapted to access one of said autonomous entities which is located in a second device separate from said embedded device.

Another object of the present invention is a system comprising a virtual machine according to the invention, wherein the virtual machine is devoid of Garbage Collector mechanism and wherein the autonomous entity which is located in the second device is configured to perform treatments required by Garbage Collector mechanism.

Advantageously, the system may comprise a virtual machine according to the invention and autonomous entities, and each of said autonomous entities may include its own autonomous memory configured to fully handle the physical storage of its data.

Advantageously, the system may comprise a virtual machine according to the invention and autonomous entities, at least one of said autonomous entities may be configured to automatically decipher persistent data before sending to, respectively to encipher the persistent data after retrieving from, the virtual machine.

Advantageously, the system may comprise two virtual machines according to the invention, said virtual machines may share a common autonomous entity and concurrency of access to the common autonomous entity may be managed by the common autonomous entity.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts the architecture of an applicative virtual machine according to the prior art,
- Figure 2 depicts a first example of architecture of an applicative virtual machine according to the invention,
- Figure 3 shows a system including three devices one of which comprises a virtual machine according to the invention,
- Figure 4 shows a system including three devices two of which comprise a virtual machine according to the invention, and
- Figure 5 shows another example of a device including a virtual machine according to the invention.

### (Detailed description of the preferred embodiments)

The invention may apply to any type of applicative virtual machine. In particular, the invention is well-suited for object-oriented virtual machines. The invention is also well-suited for applicative virtual machines embedded in a secure element or a smart card that have restricted memory and computing resources, since it can transparently rely on memories that are not directly accessible by the embedded secure element micro-controller (i.e. also said, not CPU addressable).

Examples of the virtual machine according to the invention are described below in the case of the device with limited resources. These examples are not restrictive and the invention also applies to Personal Computers, Mobile phones, tablets, and any type of computer.

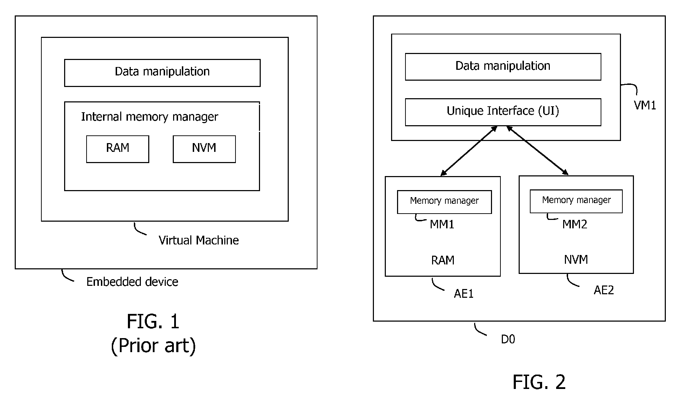

**Figure 1** illustrates the architecture of an applicative virtual machine according to the prior art.

This conventional applicative virtual machine is implemented in an embedded device like a smart card for instance. This conventional applicative virtual machine includes two main elements: the first element in charge of data manipulation and the second one (also named internal memory manager) which is in charge of the management of storage/retrieval of data in memory. The first element (data manipulation) is able to handle data of the run application and to perform operations on these data. In the context of the invention, data manipulation is said to be the second step of the following conventional computational procedure: 1) Retrieving a data Δ1 at a specified location 2) in the working memory space, applying transformations on Δ1, or using Δ1 to transform Δ2, or ... 3) Storing the value of Δ1 in a place outside the working memory space.

Usually, the internal memory manager is configured to access data in volatile memory (e.g. RAM) and in non-volatile memory (NVM). In other word, the conventional virtual machine is in charge of fully manage the storage of the applicative data: the virtual machine fully manage the format of storage of the data and the type of container used for storing the data (e.g. file tree, database or registry for instance). In addition, the virtual machine must take care of physical parameters of the memory components (ex: size of block to write data in a flash memory or bad blocks that are unavailable). Thus the virtual machine depends on the low level features of the memory components on which it is based. Conventional object-oriented virtual machines usually have a garbage collector mechanism allowing to release the blocks that are no longer used in the memory components.

**Figure 2** illustrates a first example of architecture of an applicative virtual machine according to the invention.

In this example, a device D0 includes the virtual machine VM1 and two autonomous entities AE1 and AE2. Each autonomous entity has its own memory manager adapted to fully manage structured storage of data (i.e. format, type of container and physical address where data are written) in its own memory component. In the example of Figure 1, the autonomous entity AE1 has a volatile memory component (ex: RAM) and the autonomous entity AE2 has a non-volatile memory component (ex: NVM).

The autonomous entities AE1 and AE2 are considered as autonomous because they handle the structured storage (and retrieval) of data independently of the virtual machine VM1 and autonomously. These autonomous entities are in charge of identifying the physical location of data in their memory component and of knowing how these data have to be presented to the virtual machine.

The virtual machine VM1 is separate from each of said autonomous entities. The virtual machine VM1 includes a unique interface UI configured to fully delegate the structured storage of data to these autonomous entities.

The VM1 comprises an agent dedicated to the data manipulation. Advantageously, the agent is configured to manipulate data via a set of functions.

Thanks to the invention, the virtual machine VM1 is able to access data stored in the autonomous entities through the unique interface UI irrespective of the technological type of the autonomous entities.

For example, the unique interface UI may provide the following commands: Get (i.e. read), put (i.e. write), allocate and free, as well as higher level data manipulation commands like tree management, graph management or more generally any well know data collection interface, and, be not limited to, management of the metadata of the language that the virtual machine is implemented for. The said list of commands being dependent of the application domain of the VM.

In one example, the virtual machine VM1 may allocate independent address ranges (of virtual addresses) to each autonomous entity so that the unique interface UI can send the command to the relevant autonomous entity.

Thus the virtual machine VM1 is designed so that it is independent of the mode of storage of applicative data.

The virtual machine VM1 is designed to run applications and to use a volatile working memory for storing data of these applications. The virtual machine VM1 may be configured to delegate to the autonomous entity AE1 the structured storage of data of the applications in the volatile working memory.

In one example, such configuration can comprise an autonomous entity AE1 that is in charge of allocating logical objects of the running language. Thus, this autonomous entity AE1 can implements its own Garbage collector mechanism.

In another example, the virtual machine VM1 may be configured to run applications which are designed with a specific language (i.e. domain-specific language also called DSL) specialized to a particular application domain. Such a specific language provides a set of operators/commands for manipulating data by their meaning regardless of their physical location and their storage format.

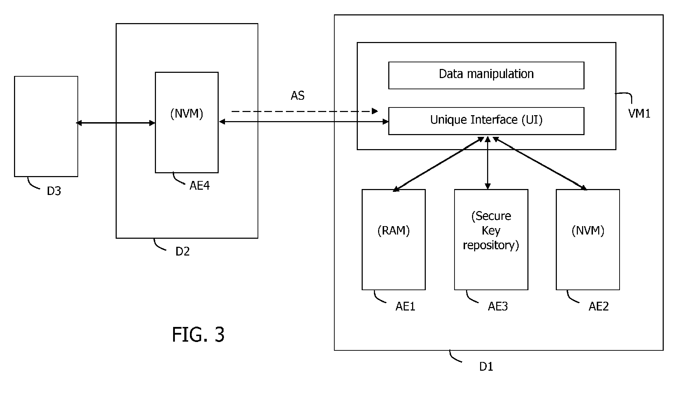

**Figure 3** illustrates an example a system including three devices one of which comprises a virtual machine according to the invention.

The system includes a first device D1 similar to the device D0 of the Figure 2 with the following difference: the device D1 comprises a third autonomous entity AE3. This autonomous entity AE3 is configured to automatically encipher persistent data received from the virtual machine VM1 and to automatically decipher persistent data before sending data to the virtual machine VM1. The autonomous entity AE3 handles its own key set for securely store applicative data.

The system also includes a second device D2 which comprises a fourth autonomous entity AE4. The autonomous entity AE4 has a non-volatile memory component (ex: NVM) and is configured to be reachable by the unique interface UI. Thus the virtual machine VM1 can read and store data in the autonomous entity AE4.

The system also includes a third device D3 which is able to access the autonomous entity AE4 and to modify data stored in the autonomous entity AE4. The device D3 may include a virtual machine according to the invention or may be devoid of virtual machine.

The autonomous entity AE4 is adapted to send to the unique interface UI an asynchronous signal AS reflecting an event impacting data stored in the autonomous entity AE4. For instance, the asynchronous signal AS may be a message indicating that a specific value has been updated (write or erased) in the memory component of the autonomous entity AE4. Thus, the virtual machine VM1 may be aware of the data modification/reading.

Advantageously, the virtual machine VM1 may be an object-oriented VM devoid of garbage collector mechanism and the autonomous entity AE4 may include an agent able to perform garbage collector treatments. Since the garbage collector mechanism is resource consuming, the virtual machine is freed from the burden of the treatments of garbage collector which are time consuming and computing resources consuming.

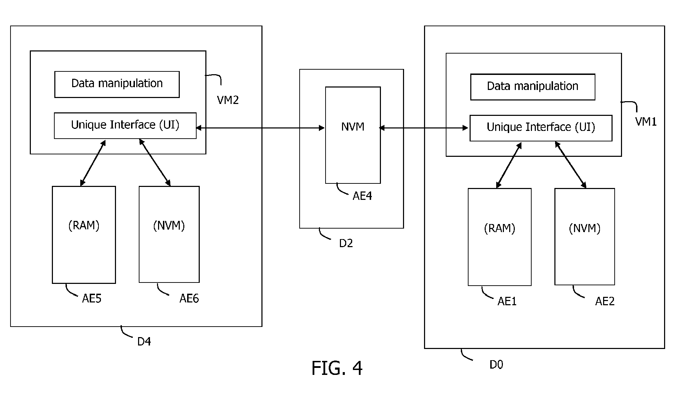

**Figure 4** illustrates another example of system including three devices, two of which comprise a virtual machine according to the invention.

The system includes the device D0 of the Figure 2 and a second device D4 similar to the device D0 of the Figure 2 with the following differences: the device D4 includes a virtual machine VM2 similar to the VM1, and two autonomous entities AE5 and AE6 that are similar to the autonomous entities AE1 and AE2.

The system also includes the device D2 of Figure 3.

The virtual machines VM1 and VM2 are configured to share the autonomous entity AE4 of the device D2 so that the autonomous entity AE4 is seen as a common entity which can be accessed by both virtual machines VM1 and VM2. The autonomous entity AE4 is configured to handle concurrent access to data it stores. For instance, an access to a data which is going to be modified due to a previous request can be postponed until the data has been updated. Thus, each VM does not have to worry about potential issues with concurrent access.

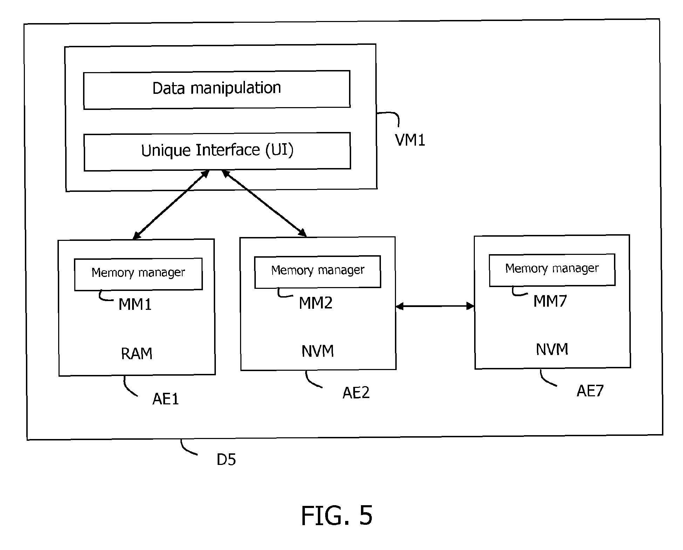

**Figure 5** illustrates another example of a device including a virtual machine according to the invention.

The device D5 is similar to the device D0 of the Figure 2 with the following difference: the device D5 comprises an additional autonomous entities AE7 and the autonomous entities AE2 is configured to delegate storage of data to the autonomous entities AE7.

The autonomous entity AE7 has its own memory manager MM7 which is configured to fully manage storage of data (i.e. format, type of container and physical address where data are written) in its own memory component (e.g. NVM component). For example, the autonomous entities AE2 may access the autonomous entities AE7 through a bus like a Serial Peripheral Interface (SPI).

In this example, the autonomous entity AE2 may store data in its own memory component and/or delegate data storage to the autonomous entity AE7. For instance, the autonomous entity AE7 may be configured to securely store the data by automatically enciphering it with a secret key, while data stored in memory component of the autonomous entity AE2 remain in clear. The data storage mode is under the responsibility of the autonomous entity AE2 and the virtual machine VM1 can access the data regardless of how there are stored.

In another example (not drawn), the autonomous entity AE7 can be implemented based on a memory component external to the device D5.

In another example (not drawn), the applicative virtual machine (AVM) runs into a secure element. This AVM accesses a first autonomous entity which is embedded in the secure element. The first autonomous entity has a memory manager configured to manage a security service (i.e. encryption of data), which could be accessed through a cache system. The AVM also accesses a second autonomous entity which is outside the secure element. (i.e. in another device) The second autonomous entity has a memory manager configured to manage the following services: (but not limited to)
- Abstraction of the I/O (i.e. it handles several I/O simultaneously, but the AVM only see the memory access),
- Management of a dictionary,
- Management of a tree structure.
Additionally, the second autonomous entity is configured to send asynchronous message to the AVM. The first autonomous entity is designed to use the services provided by the second autonomous entity.

An incoming message is read by the second autonomous entity which in turn sends an asynchronous message directly to the AVM. The AVM then accesses the first autonomous entity to manipulate the message. In response, the first autonomous entity uses the service of the second autonomous entity to access the incoming message. Then the memory manager of the second autonomous entity send the incoming message through the I/O.

Languages interpreted by a virtual machine usually comprise a set of metadata that describes the structure, properties, credentials and behaviors of runtime objects. Their class allocation and memory structuration could also be delegated by the VM to the memory manager. In that case the VM would only manipulate classes from a logical point of view, regardless of physical metadata. The invention permits metadata externalization and eases language porting on a pre-designed virtual machine (for example for a wide set of Domain Specific Language).

The invention provides a new language virtual machine model which disconnected data manipulation from data retrieval at runtime. Consequently, the applicative virtual machine can be light and portable (since not linked to hardware requirements). Moreover the virtual machine is less complex than a customary virtual machine. Such a new virtual machine is compliant with limited resources of IOT and M2M devices.

In addition, since the virtual machine is relieved of low level structured storage, data can be stored anywhere and have any size.

It must be understood, within the scope of the invention that the above-described embodiments are provided as non-limitative examples. In particular, the virtual machine may access any number of autonomous entities.

## Claims

1. An applicative **virtual machine** (VM1) **characterized in that** the virtual machine (VM1) comprising a unique interface (UI) and configured to fully delegate, through said unique interface (UI), the structured storage of data to autonomous entities (AE1, AE2, AE3) which are separate from the virtual machine (VM1) and which are configured to identify the physical memory location of said data.

2. An applicative virtual machine (VM1) according to claim 1, wherein the virtual machine (VM1) is able to run applications which are designed for a specific language specialized to a particular application domain, said specific language providing a set of operators for manipulating data by their meaning regardless of their physical location and their storage format.

3. A virtual machine (VM1) according to claim 1, wherein the virtual machine (VM1) is able to run an application and is designed to use a volatile working memory for manipulating data of said application and wherein the virtual machine (VM1) is configured to delegate to one (AE1) of said autonomous entities the structured storage of data of said application in another memory component different from said volatile working memory.

4. A virtual machine (VM1) according to claim 1, wherein the virtual machine (VM1) is configured to receive from one (AE4) of said autonomous entities an asynchronous signal (AS) reflecting an event impacting data stored in one (AE4) of said autonomous entities.

5. A virtual machine (VM1) according to claim 1, wherein the virtual machine (VM1) is able to access data stored in said autonomous entities (AE1, AE2, AE3) through the unique interface (UI) irrespective of the technological type of said autonomous entities (AE1, AE2).

6. A virtual machine (VM1) according to claim 1, wherein the unique interface (UI) is adapted to access one of said autonomous entities (AE4) which is located in a second device (D2) separate from said embedded device (D1).

7. A **system** comprising a virtual machine (VM1) according to claim 6, wherein the virtual machine (VM1) is devoid of Garbage Collector mechanism and wherein the autonomous entity (AE4) which is located in the second device (D2) is configured to perform treatments required by Garbage Collector mechanism.

8. A system comprising a virtual machine (VM1) according to claim 1 and said autonomous entities (AE1, AE2, AE3), wherein each of said autonomous entities (AE1, AE2, AE3) includes its own autonomous memory manager (MM1, MM2) configured to fully handle the physical storage of its data.

9. A system comprising a virtual machine (VM1) according to claim 1 and said autonomous entities (AE1, AE2, AE3), wherein at least one (AE3) of said autonomous entities is configured to automatically decipher persistent data before sending to, respectively to encipher said persistent data after retrieving from, the virtual machine (VM1).

10. A system comprising two virtual machines (VM1, VM2) according to claim 1, wherein said virtual machines (VM1, VM2) share a common autonomous entity (AE4) and wherein concurrency of access to the common autonomous entity (AE4) is managed by the common autonomous entity (AE4).
